# EUROPEAN PATENT APPLICATION

(11) **EP 4 760 517 A1**
(43) Date of publication of application: **17.06.2026**
(21) Application number: 23948569.1
(22) Date of filing: 10.08.2023
(51) Int. Cl.: G06F 13/42, G06F 13/28

(54) **SIGNAL PROCESSING APPARATUS, AND COMMUNICATION APPARATUS FOR VEHICLE COMPRISING SAME**

(71) Applicant: LG Electronics Inc., Yeongdeungpo-gu Seoul 07336 (KR)
(72) Inventor: HAN, Dongwoo, Seoul 06772 (KR); KIM, Minhyoung, Seoul 06772 (KR); KIM, Woosung, Seoul 06772 (KR)
(74) Representative: Vossius & Partner Patentanwälte Rechtsanwälte mbB
(86) International application number: PCT/KR2023/011819
(87) International publication number: WO 2025/033574

(57) **Abstract**

A signal processing device according to an embodiment of the present disclosure includes: a storage device; and a processor configured to execute a Peripheral Component Interconnect (PCI) Express driver, execute a Host Channel Adapter (HCA) driver on the PCI Express driver, and execute a Remote direct memory access (RDMA) driver on the HCA driver. Accordingly, high-performance, scalable data-sharing can be provided.

## Description

### BACKGROUND

### 1. Technical Field

The present disclosure relates to a signal processing device and a communication apparatus for vehicle including the same, and more particularly to a signal processing device capable of providing high-performance, scalable data-sharing, and a communication apparatus for vehicle including the signal processing device.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device in the vehicle receives sensor data from various vehicle internal sensor devices and processes the sensor data.

Meanwhile, the type and number of sensors mounted in the vehicle increase rapidly due to the Advanced Driver Assistance System (ADAS) or autonomous driving, etc., leading to an explosion in data generated in the vehicle.

Meanwhile, a high-performance, high-capacity storage is required in order to store such data and process the data in conjunction with a cloud server and the like.

In the case in which a plurality of processors or a plurality of signal processing devices are used in a vehicle, and each processor or each signal processing device independently operates a memory and a storage device, there is a drawback in that data sharing between the respective processors or the respective signal processing devices becomes difficult, and flexibility and scalability of system configuration are reduced.

Further, in the case of using fiber-optic cable-based data communication between the respective signal processing devices, a refractive index of the fiber optic cable is limited, thereby causing space or design constraints in each signal processing device.

### SUMMARY

It is an objective of the present disclosure to provide a method for flexible, high-bandwidth data communication between computing nodes in a high-performance signal processing device for vehicles using a plurality of computing nodes.

It is another objective of the present disclosure to provide a function for configuring an efficient and scalable data storage device between nodes based on a method for high-bandwidth data communication between computing nodes, and a function satisfying safety requirements required for a vehicle device.

It is yet another objective of the present disclosure to provide a communication method with high bandwidth and scalability between controllers when designing electrical systems of a vehicle, by extending the above two functions to other vehicle controllers.

It is yet another objective of the present disclosure to provide a signal processing device capable of providing high-performance, scalable data-sharing, and a communication apparatus for vehicle including the signal processing device.

It is yet another objective of the present disclosure to provide a signal processing device capable of providing efficient management of a data storage device and improving scalability thereof, and a communication apparatus for vehicle including the signal processing device.

In accordance with an aspect of the present disclosure, the above and other objectives can be accomplished by providing a signal processing device including: a storage device; and a processor configured to execute a Peripheral Component Interconnect (PCI) Express driver, execute a Host Channel Adapter (HCA) driver on the PCI Express driver, and execute a Remote direct memory access (RDMA) driver on the HCA driver.

Meanwhile, the processor can be configured to execute a Non-Volatile Memory Express (NVMe) driver on the RDMA driver.

Meanwhile, the processor can be configured to exchange data with the storage device through the NVMe driver.

Meanwhile, the signal processing device can further include a PCI switch configured to receive data input through an external flexible cable, wherein the processor can be configured to store the data in the storage device.

Meanwhile, the signal processing device can further include a second processor configured to exchange data with the processor or the storage device based on PCI Express.

Meanwhile, the processor can be configured to operate as a host, and the second processor can be configured to operate as a client, wherein the processor can be configured to control the storage device in response to a data write or data read request from the second processor for writing data to the storage device or reading data from the storage device.

Meanwhile, in order to access the storage device, the second processor can be configured to execute a PCI Root Complex (RC) and execute a second PCI driver on the PCI RC.

Meanwhile, the second processor can be configured to execute a second HCA driver on the second PCI driver, and execute a second RDMA driver on the second HCA driver.

Meanwhile, in order for the second processor to access the storage device, the processor can be configured to execute a PCI End Point (EP) and execute the HCA driver on the PCI EP.

Meanwhile, the processor can be configured to further execute a Non-Transparent Bridge (NTB) transport between the PCI driver and the HCA driver.

Meanwhile, the NTB transport can be configured to generate and manage a Que-Pair list.

Meanwhile, the NTB transport can be configured to separately process an Application Programming Interface (API) based on the NTB of a Host Channel Adapter (HCA) channel and an API based on NTB NetDev.

Meanwhile, the processor can be configured to divide the storage device into a plurality of areas, and map each of the areas to each Que-Pair.

Meanwhile, the processor can be configured to divide the storage device into a plurality of areas and map the areas to each of a plurality of processors or each of a plurality of signal processing devices, and swap or replace some of the plurality of areas based on power off or restart of some of the processors or some of the signal processing devices.

Meanwhile, in response to a request for authentication from another processor or another signal processing device, the processor can be configured to perform authentication based on a security key, and exchange data with the processor or the signal processing device authenticated.

Meanwhile, the processor can be configured to encrypt or decrypt data in a secured area of the storage device.

Meanwhile, the signal processing device can further include a second processor, wherein the processor can be configured to store data, input through an external flexible cable, in a first area of the storage device, and the second processor can be configured to read data from the first area of the storage device and change a namespace of the first area of the storage device.

In accordance with another aspect of the present disclosure, the above and other objectives can be accomplished by providing a signal processing device including: a storage device; and a processor configured to store data, input through an external flexible cable, in a first area of the storage device; and a second processor configured to read data from the first area of the storage device and change a namespace of the first area of the storage device.

In accordance with yet another aspect of the present disclosure, the above and other objectives can be accomplished by providing a communication apparatus for vehicle including: a signal processing device; and a second signal processing device configured to exchange data with the signal processing device, wherein the signal processing device includes: a storage device; and a processor configured to execute a Peripheral Component Interconnect (PCI) Express driver, execute a Host Channel Adapter (HCA) driver on the PCI Express driver, and execute a Remote direct memory access (RDMA) driver on the HCA driver.

Meanwhile, the communication apparatus for vehicle can further include a retimer configured to receive data from the second signal processing device and transmit the data to the signal processing device.

### EFFECTS OF THE DISCLOSURE

A signal processing device according to an embodiment of the present disclosure includes: a storage device; and a processor configured to execute a Peripheral Component Interconnect (PCI) Express driver, execute a Host Channel Adapter (HCA) driver on the PCI Express driver, and execute a Remote direct memory access (RDMA) driver on the HCA driver. Accordingly, high-bandwidth, flexible data communication between computing nodes can be provided. In addition, high-performance, scalable data-sharing can be provided.

Meanwhile, the processor can be configured to execute a Non-Volatile Memory Express (NVMe) driver on the RDMA driver. Accordingly, high-performance, scalable data-sharing can be provided.

Meanwhile, the processor can be configured to exchange data with the storage device through the NVMe driver. Accordingly, high-performance, scalable data-sharing can be provided.

Meanwhile, the signal processing device can further include a PCI switch configured to receive data input through an external flexible cable, wherein the processor can be configured to store the data in the storage device. Accordingly, high-performance, scalable data-sharing can be provided while performing data communication based on a flexible cable.

Meanwhile, the signal processing device can further include a second processor configured to exchange data with the processor or the storage device based on PCI Express. Accordingly, high-performance, scalable data-sharing can be provided.

Meanwhile, the processor can be configured to operate as a host, and the second processor can be configured to operate as a client, wherein the processor can be configured to control the storage device in response to a data write or data read request from the second processor for writing data to the storage device or reading data from the storage device. Accordingly, high-performance, scalable data-sharing can be provided.

Meanwhile, in order to access the storage device, the second processor can be configured to execute a PCI Root Complex (RC) and execute a second PCI driver on the PCI RC. Accordingly, high-performance, scalable data-sharing can be provided while performing data communication based on a flexible cable.

Meanwhile, the second processor can be configured to execute a second HCA driver on the second PCI driver, and execute a second RDMA driver on the second HCA driver. Accordingly, high-performance, scalable data-sharing can be provided.

Meanwhile, in order for the second processor to access the storage device, the processor can be configured to execute a PCI End Point (EP) and execute the HCA driver on the PCI EP. Accordingly, high-performance, scalable data-sharing can be provided.

Meanwhile, the processor can be configured to further execute a Non-Transparent Bridge (NTB) transport between the PCI driver and the HCA driver. Accordingly, high-performance, scalable data-sharing can be provided.

Meanwhile, the NTB transport can be configured to generate and manage a Que-Pair list. Accordingly, high-performance, scalable data-sharing can be provided.

Meanwhile, the NTB transport can be configured to separately process an Application Programming Interface (API) based on the NTB of a Host Channel Adapter (HCA) channel and an API based on NTB NetDev. Accordingly, high-performance, scalable data-sharing can be provided.

Meanwhile, the processor can be configured to divide the storage device into a plurality of areas, and map each of the areas to each Que-Pair. Accordingly, it is possible to provide efficient management of a storage space of the storage device and improve scalability thereof.

Meanwhile, the processor can be configured to divide the storage device into a plurality of areas and map the areas to each of a plurality of processors or each of a plurality of signal processing devices, and swap or replace some of the plurality of areas based on power off or restart of some of the processors or some of the signal processing devices. Accordingly, it is possible to provide efficient management of a storage space of the storage device and improve scalability thereof.

Meanwhile, in response to a request for authentication from another processor or another signal processing device, the processor can be configured to perform authentication based on a security key, and exchange data with the processor or the signal processing device authenticated. Accordingly, security of the storage device can be improved.

Meanwhile, the processor can be configured to encrypt or decrypt data in a secured area of the storage device. Accordingly, security of the storage device can be improved.

Meanwhile, the signal processing device can further include a second processor, wherein the processor can be configured to store data, input through an external flexible cable, in a first area of the storage device, and the second processor can be configured to read data from the first area of the storage device and change a namespace of the first area of the storage device. Accordingly, high-performance, scalable data-sharing can be provided while performing data communication based on a flexible cable.

A signal processing device according to another embodiment of the present disclosure includes: a storage device; and a processor configured to store data, input through an external flexible cable, in a first area of the storage device; and a second processor configured to read data from the first area of the storage device and change a namespace of the first area of the storage device. Accordingly, high-bandwidth, flexible data communication between computing nodes can be provided while performing data communication based on a flexible cable. In addition, high-performance, scalable data-sharing can be provided.

A communication apparatus for vehicle according to an embodiment of the present disclosure includes: a signal processing device; and a second signal processing device configured to exchange data with the signal processing device, wherein the signal processing device includes: a storage device; and a processor configured to execute a Peripheral Component Interconnect (PCI) Express driver, execute a Host Channel Adapter (HCA) driver on the PCI Express driver, and execute a Remote direct memory access (RDMA) driver on the HCA driver. Accordingly, high-bandwidth, flexible data communication between computing nodes can be provided. In addition, high-performance, scalable data-sharing can be provided. Further, it is possible to provide a function satisfying safety requirements required for a vehicle device.

Meanwhile, the communication apparatus for vehicle can further include a retimer configured to receive data from the second signal processing device and transmit the data to the signal processing device. Accordingly, high-performance, scalable data-sharing can be provided.

### BRIEF DESCRIPTION OF THE DRAWINGS

FIG. 1 is a diagram illustrating an example of the exterior and interior of a vehicle;
FIGS. 2A to 2C are diagrams illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of the communication apparatus for vehicle of FIG. 3B;
FIGS. 5A to 5D are diagrams illustrating various examples of a communication apparatus for vehicle;
FIG. 6 is a block diagram illustrating an example of a communication apparatus for vehicle according to an embodiment of the present disclosure;
FIGS. 7A to 7C are diagrams referred to in the description of operation of FIG. 6;
FIG. 8 is an exemplary internal block diagram of a communication device associated with the present disclosure;
FIG. 9 is an exemplary internal block diagram of a signal processing device according to an embodiment of the present disclosure;
FIG. 10 is an exemplary internal block diagram of a signal processing device according to another embodiment of the present disclosure;
FIG. 11 is an exemplary internal block diagram of a communication apparatus for vehicle according to an embodiment of the present disclosure; and
FIGS. 12A to 14 are diagrams referred to in the description of operation of FIG. 9 to 11.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

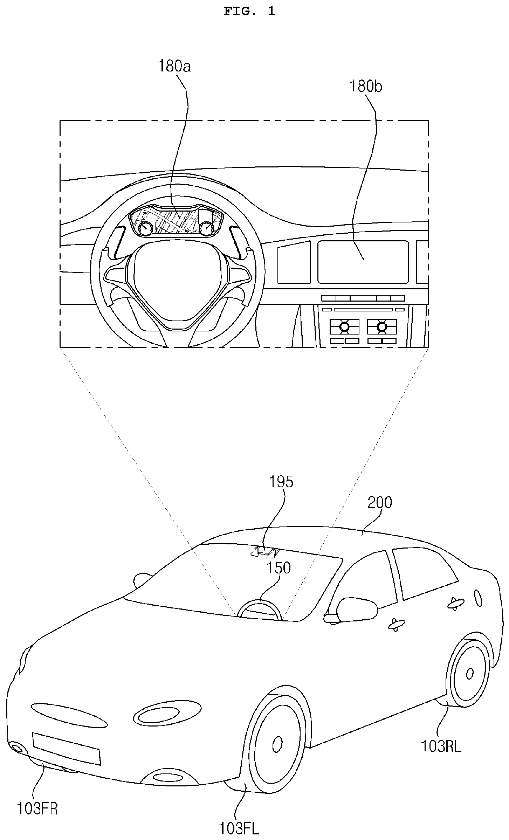

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

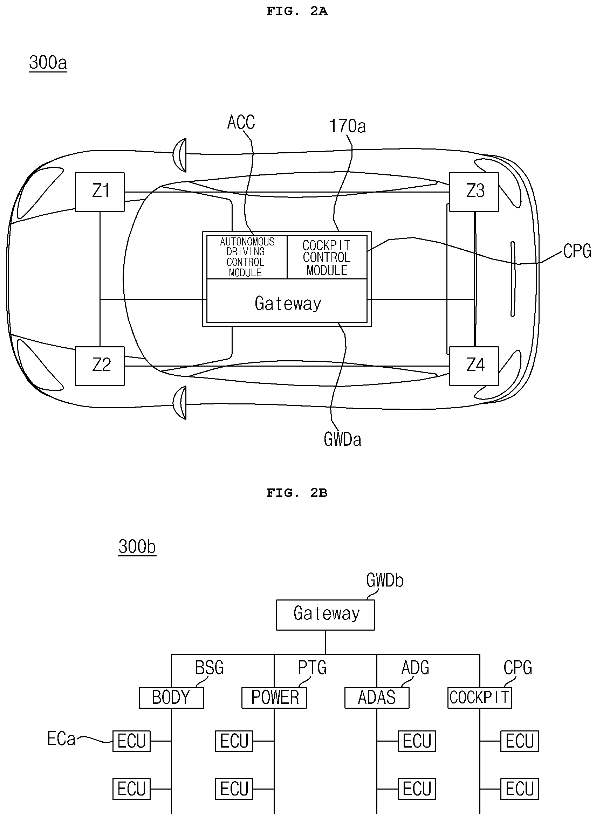

FIGS. 2A to 2C are diagrams illustrating various architectures of a vehicle communication gateway.

First, FIG. 2A is a diagram illustrating a first architecture of a vehicle communication gateway.

Referring to the drawing, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2A can exchange data with an external communication module (not shown) or processors (not shown) in the plurality of zones Z1 to Z4.

FIG. 2B is a diagram illustrating a second architecture of a vehicle communication gateway.

Referring to the drawing, a second architecture 300b can correspond to a correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU can be electrically connected to the respective modules BSG, PTG, ADG, and CPG.

Meanwhile, the respective processors ECU can be connected to the gateway GWDb while being integrated therein.

Meanwhile, the signal processing device 170 including the gateway GWDb of FIG. 2B can function as a domain integrated signal processing device.

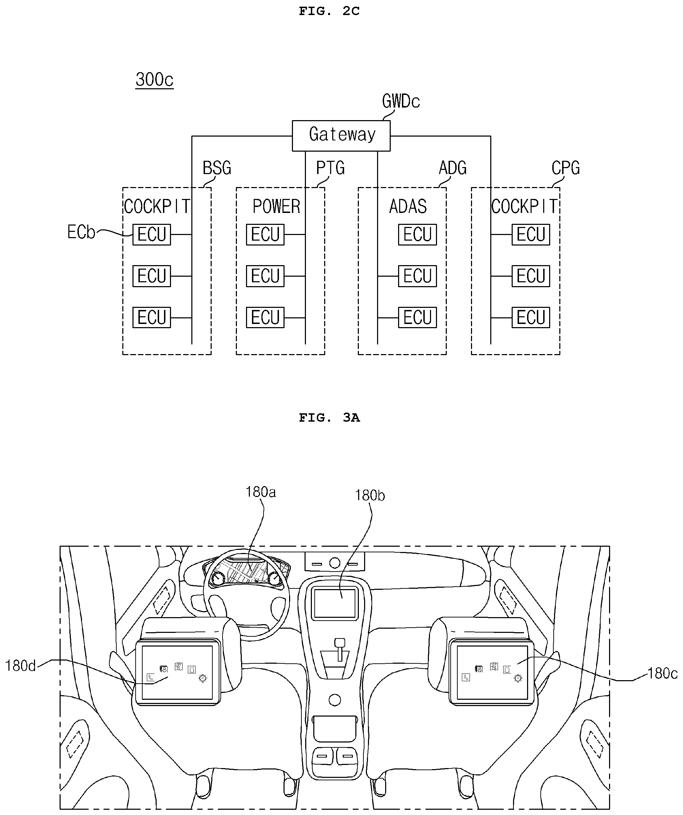

FIG. 2C is a diagram illustrating a third architecture of a vehicle communication gateway.

Referring to the drawing, a third architecture 300c can correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules can be electrically connected in parallel to the gateway GWDc.

In comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

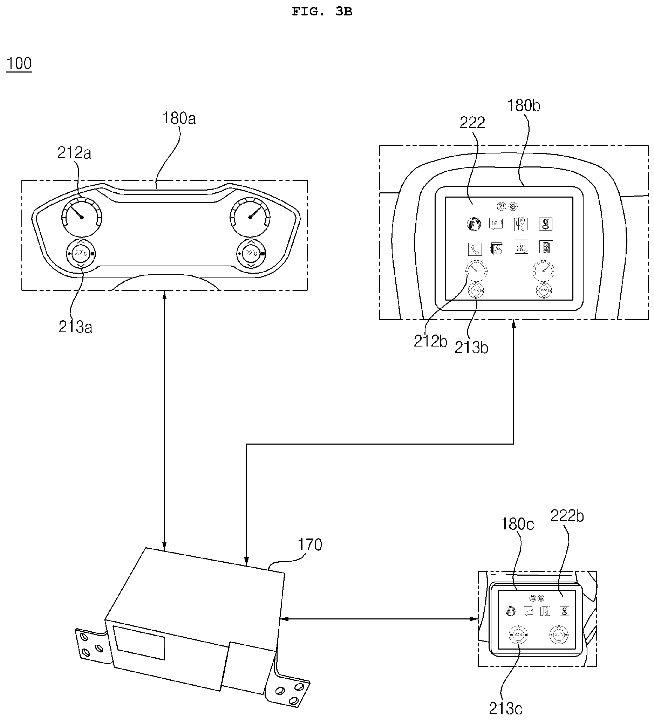

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

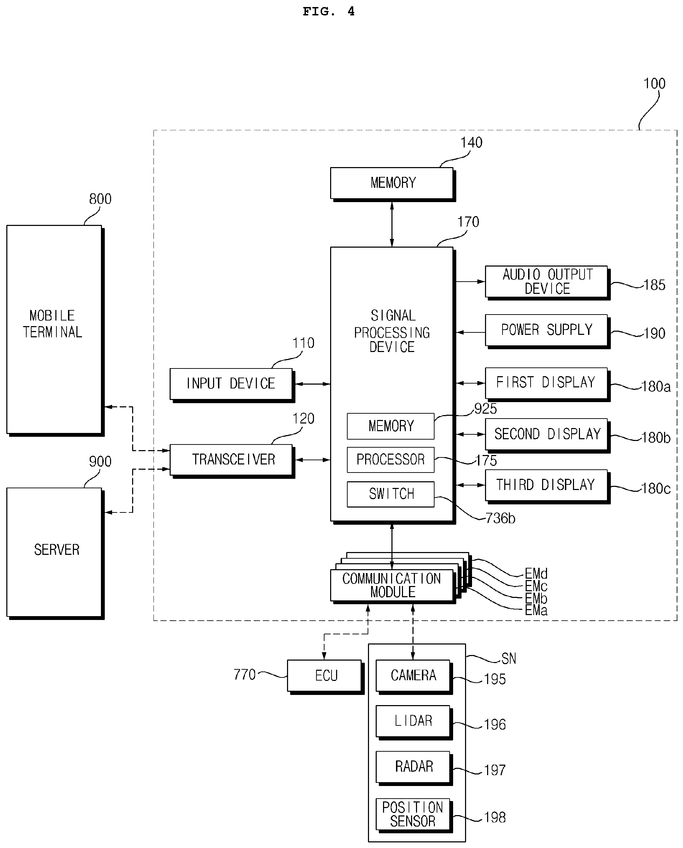

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2A.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

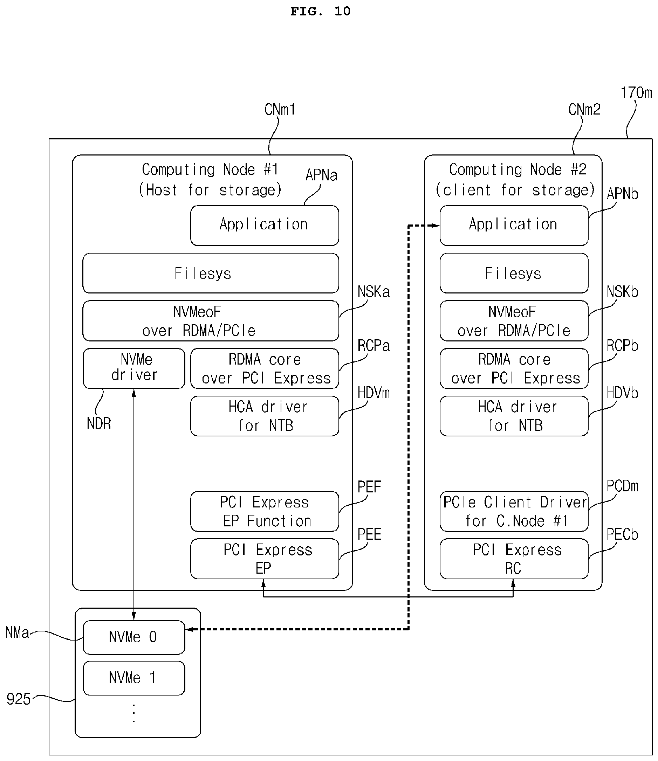

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

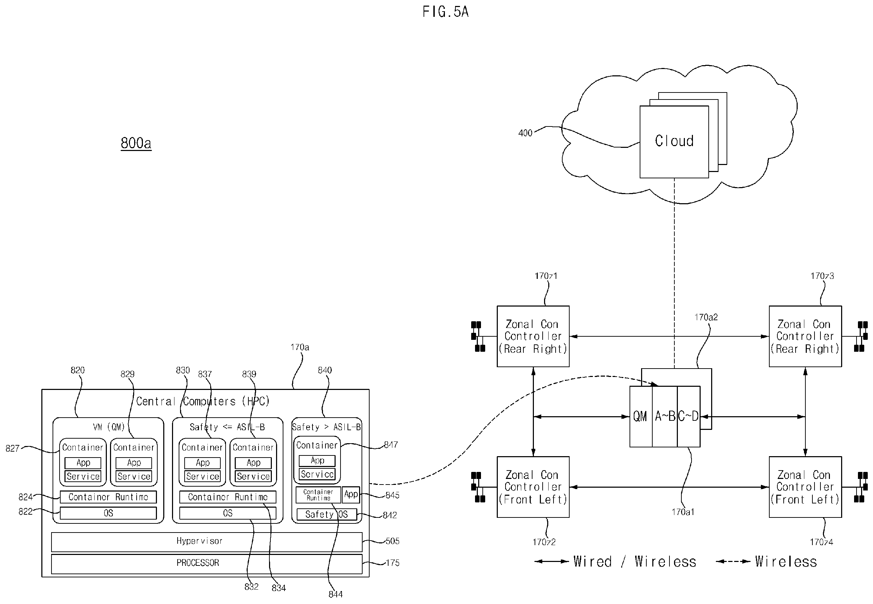

Meanwhile, the signal processing device 170 in the display apparatus 100 of FIG. 4 can be the same as signal processing devices 170, 170a1, and 170a2 of a vehicle display apparatus of FIG. 5A and subsequent figures.

FIGS. 5A to 5D are diagrams illustrating various examples of a communication apparatus for vehicle.

FIG. 5A is a diagram illustrating an example of a communication apparatus for vehicle according to an embodiment of the present disclosure.

Referring to FIG. 5A, a communication apparatus 800a for vehicle according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can execute an operating system 822, a container runtime 824 on the operating system 822, and containers 827 and 829 on the container runtime 824.

The second virtual machine 830 can be a virtual machine corresponding to ASIL A or ASIL B with the combination of severity, exposure, and controllability values being 7 or 8.

The second virtual machine 830 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

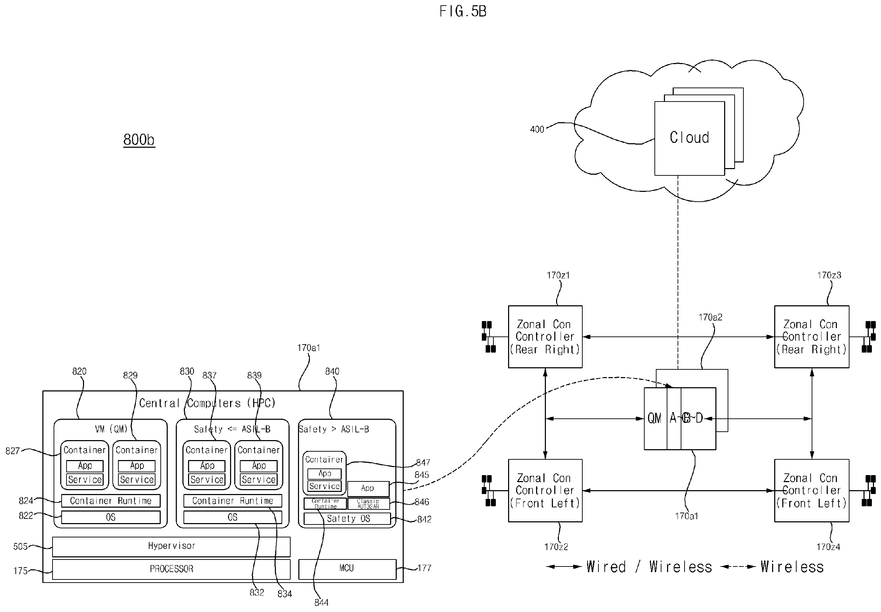

Meanwhile, unlike the drawing, the third virtual machine 840 can also be executed by a separate core, rather than by the processor 175, which will be described below with reference to FIG. 5B.

FIG. 5B is a diagram illustrating another example of a communication apparatus for vehicle according to an embodiment of the present disclosure.

Referring to FIG. 5B, a communication apparatus 800b for vehicle according to an embodiment of the present disclosure includes signal processing devices 170a1 and 170a2 and a plurality of zonal signal processing devices 170Z1 to 170Z4.

The communication apparatus 800b for vehicle of FIG. 5B is similar to the communication apparatus 800a for vehicle of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 830 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

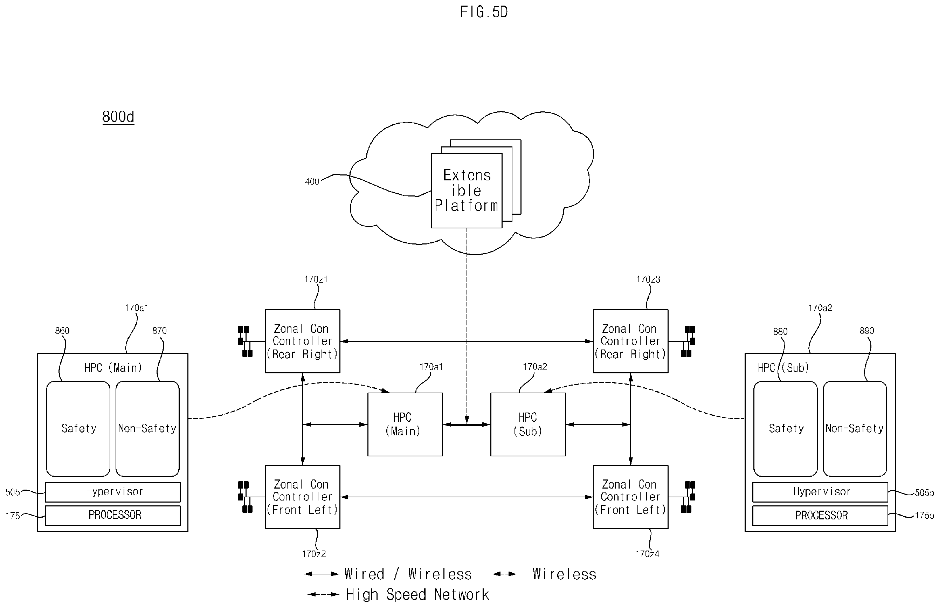

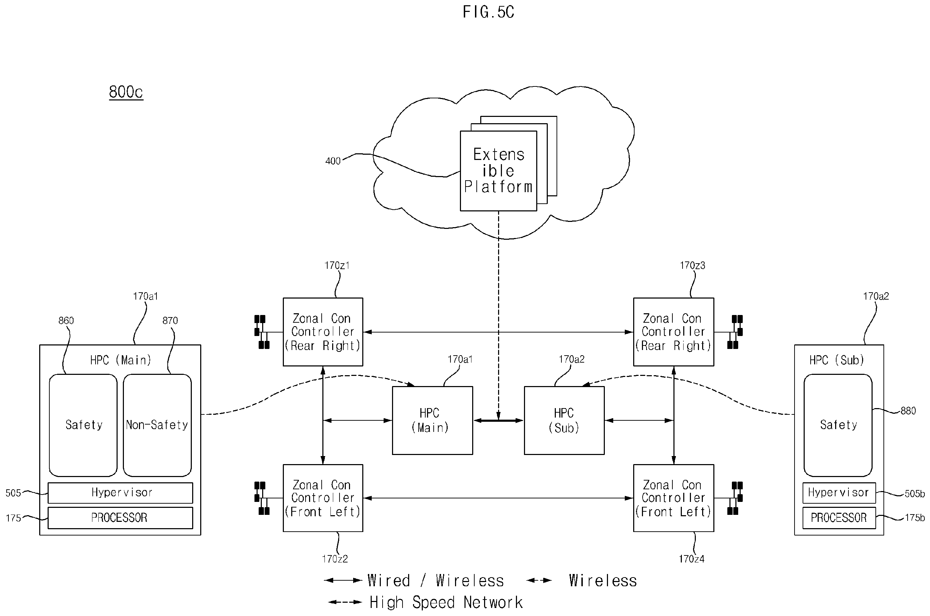

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a communication apparatus for vehicle according to an embodiment of the present disclosure.

Referring to FIG. 5C, a communication apparatus 800c for vehicle according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non-safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non-safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a communication apparatus for vehicle according to an embodiment of the present disclosure.

Referring to FIG. 5D, a communication apparatus 800d for vehicle according to an embodiment of the present disclosure includes signal processing devices 170a1 and 170a2 and a plurality of zonal signal processing devices 170Z1 to 170Z4.

The communication apparatus 800d for vehicle of FIG. 5D is similar to the communication apparatus 800c for vehicle of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can execute the hypervisor 505b, and can execute each of a safety virtual machine 880 and a non-safety virtual machine 890 on the hypervisor 505.

That is, unlike FIG. 5C, there is a difference in that the processor 175b in the second signal processing device 170a2 further executes the non-safety virtual machine 890.

In the method, safety and non-safety virtual machines can be processed separately by the first signal processing device 170a1 and the second signal processing device 170a2, thereby improving stability and processing speed.

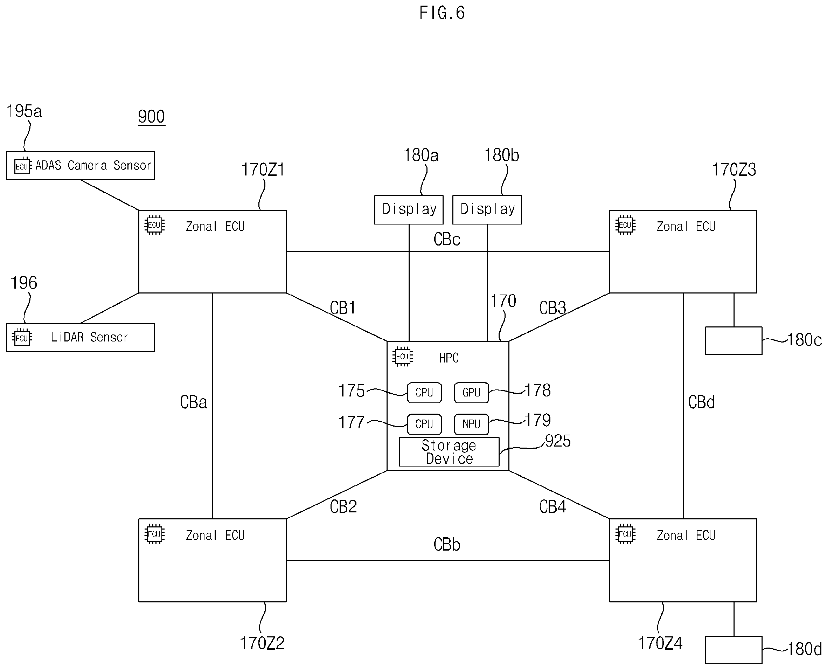

FIG. 6 is an exemplary block diagram of a communication apparatus for vehicle according to an embodiment of the present disclosure.

Referring to FIG. 6, a communication apparatus 900 for vehicle (hereinafter referred to as a vehicle communication apparatus) according to an embodiment of the present disclosure includes a plurality of zonal signal processing devices 170Z1 to 170Z4 and a signal processing device 170.

In this case, the signal processing device 170 is a high-performance centralized signal processing and control device including a plurality of CPUs and GPUs, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the at least one processor can be a central processor.

Meanwhile, the signal processing device 170 according to an embodiment of the present disclosure can further include a graphic processor or a neural processor.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the communication apparatus 900 for vehicle according to an embodiment of the present disclosure is peripheral component interconnect express communication in order to provide high band and low delay communication.

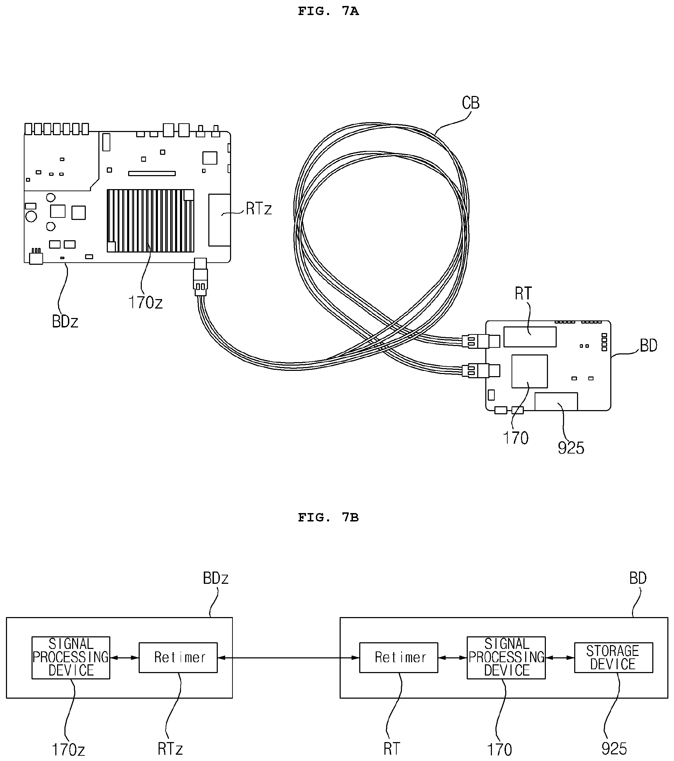

FIGS. 7A to 7C are diagrams referred to in the description of operation of FIG. 6.

FIG. 7A is a diagram illustrating an example in which a circuit board BDz including a zonal signal processing device 170Z and a circuit board BD including a signal processing device 170 and a storage device 925 are connected by a flexible cable CB.

Referring to the drawing, the circuit board BDz including the zonal signal processing device 170Z can further include a retimer RTz for signal compensation.

For example, the retimer RTz can be configured to perform signal compensation by receiving data from the second signal processing device 170Z, and transmit the compensated signal to the signal processing device 170.

The circuit board BD including the signal processing device 170 can further include a retimer RT for signal compensation.

For example, the retimer RT can be configured to perform signal compensation by receiving data from the signal processing device 170, and transmit the compensated signal to the second signal processing device 170Z.

Data communication based on the flexible cable can be performed between the zonal signal processing device 170Z and the signal processing device 170, and a distance between the signal processing device 170 and a plurality of zonal signal processing devices 170Z1 to 170Z4 can be reduced, thereby improving the degree of design freedom, etc.

FIG. 7B is an internal block diagram of the two circuit boards of FIG. 7A.

Referring to FIG. 7B, the circuit board BDz corresponding to the zonal signal processing device 170Z can include the zonal signal processing device 170Z and the retimer RTz for signal compensation.

The circuit board BD corresponding to the signal processing device 170 can include the signal processing device 170, the storage device 925, and the retimer RT for signal compensation.

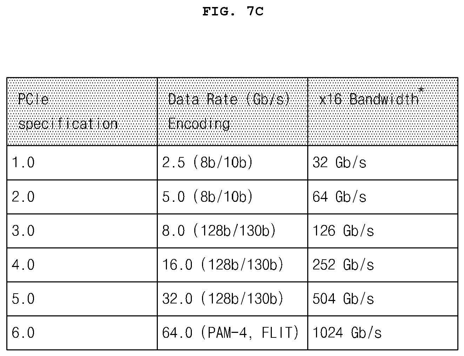

FIG. 7C is a diagram illustrating a transmission speed in Peripheral Component Interconnect Express (PCI Express) communication.

Referring to FIG. 7C, if the storage device 925 is PCI Express (Peripheral Component Interconnect express) Gen 3 and uses sixteen lanes, the transmission speed can be approximately 8*16=128 Gbps, and when using four lanes, the transmission speed can be approximately 8*4=32 Gbps.

However, as a distance for using the lanes as a physical connection is limited in the PCI Express communication, the present disclosure confirmed that the PCI Express communication is possible within a distance of approximately 7 m.

Accordingly, in the present disclosure, PCI Express communication is performed between the zonal signal processing device 170Z and the signal processing device 170.

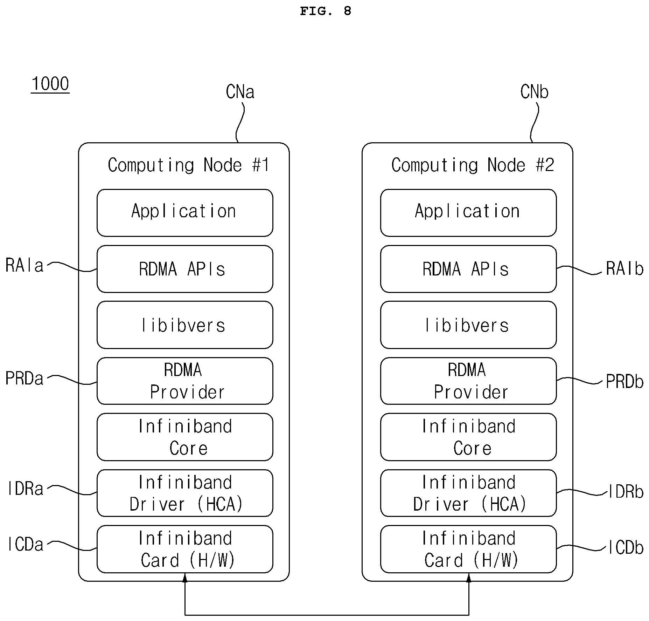

FIG. 8 is an exemplary internal block diagram of a communication device associated with the present disclosure.

Referring to FIG. 8, a communication device 100 associated with the present disclosure performs fiber-optic cable-based data communication between two computing nodes.

A first computing node CNa includes InfiniBand card ICDa which is hardware, and is configured to execute InfiniBand driver IDRa for driving the InfiniBand card ICDa which is hardware, and execute InfiniBand core on the InfiniBand driver IDRa.

Meanwhile, the first computing node CNa is configured to execute a Remote direct memory access (RDMA) provider PRDa on the infiniband core, execute an Application Programming Interface (API) RAIa on the RDMA provider PRDa, and execute an application on the RDMA API RAIa.

Meanwhile, the application in the first computing node CNa can be configured to transmit a large amount of data to a second computing node CNb, which is a correspondent node, by using the user level RDMA API RAIa such as rcopy.

The second computing node CNb includes InfiniBand card ICDb which is hardware, and is configured to execute InfiniBand driver IDRb for driving the InfiniBand card ICDb which is hardware, and execute InfiniBand core on the InfiniBand driver IDRb.

Meanwhile, the second computing node CNb is configured to execute a Remote direct memory access (RDMA) provider PRDb on the InfiniBand core, execute an Application Programming Interface RAIb on the RDMA provider PRDb, and execute an application on the RDMA API RAIb.

Meanwhile, the application in the second computing node CNb can be configured to transmit a large amount of data to the first computing node CNa, which is a correspondent node, by using the user level RDMA API RAIb such as rcopy.

As described above, the communication device 100 associated with the present disclosure can transmit or receive a large amount of data by combining the InfiniBand and the RDMA.

However, the communication device 100 associated with the present disclosure is required to use an inflexible fiber optic cable, thereby causing space or design constraints.

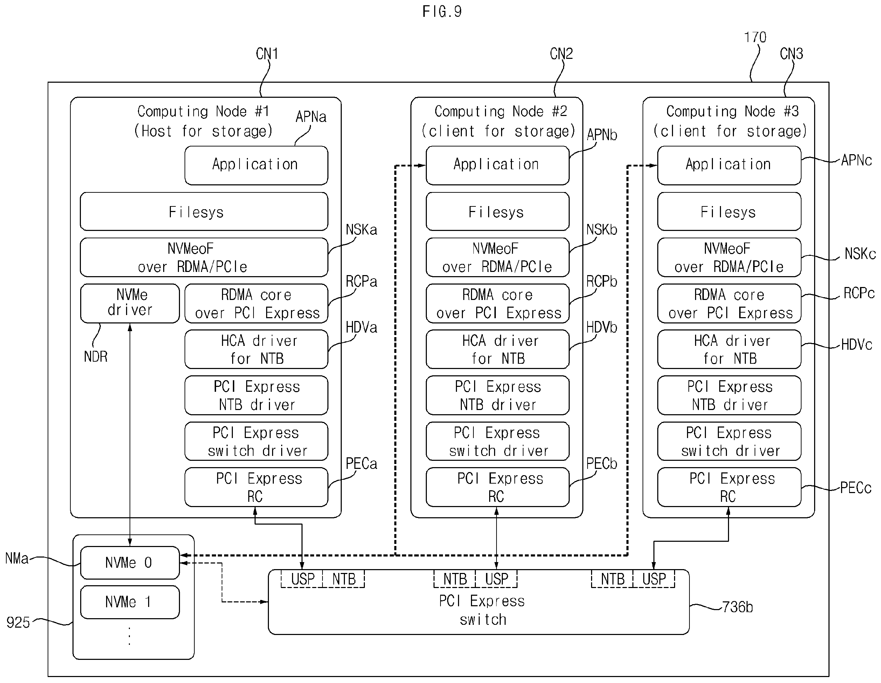

Accordingly, in the present disclosure, the Peripheral Component Interconnect Express technology may be applied, instead of the InfiniBand, between the computing nodes, which will be described below with reference to FIG. 9 and subsequent figures.

FIG. 9 is an exemplary internal block diagram of a signal processing device according to an embodiment of the present disclosure.

Referring to FIG. 9, a signal processing device 170 according to an embodiment of the present disclosure can include a plurality of computing nodes CN1, CN2, and Cn3.

In this case, the plurality of computing nodes CN1, CN2, and Cn3 can correspond to the plurality of processors 175, 177, and 178 of FIG. 6.

The signal processing device 170 according to the embodiment of the present disclosure can include: a storage device 925; and a first computing node CN1 or a processor 175 configured to execute a Peripheral Component Interconnect (PCI) Express driver, execute a Host Channel Adapter (HCA) driver HDVa on the PCI Express driver, and execute a Remote direct memory access (RDMA) driver RCPa on the HCA driver HDVa. Accordingly, high-performance, scalable data-sharing can be provided.

Meanwhile, the first computing node CN1 or the processor 175 can exchange data with the storage device 925 through a non-volatile memory express driver NSKa. Accordingly, high-performance, scalable data-sharing can be provided.

In the drawing, an example is illustrated in which the first computing node CN1 or the processor 175 is configured to execute a Peripheral Component Interconnect Express (PCI Express) Root Complex (RC) PECa, execute a PCI Express switch driver on the PCI Express RC PECa, execute a PCI Express NTB driver on the PCI Express switch driver, and execute a Host Channel Adapter (HCA) driver HDVa on the PCI Express NTB driver.

Meanwhile, the first computing node CN1 or the processor 175 is configured to execute the Remote Direct Memory Access (RDMA) driver RCPa on the HCA driver HDVa.

Unlike FIG. 8, the HCA driver HDVa for operating the InfiniBand card is executed on the PCI Express NTB driver, thereby allowing the HCA driver HDVa to transmit an RDMA data packet to the PCI Express Bus.

Meanwhile, the storage device 925 can include a plurality of Non-Volatile Memory Express (NVMe) devices NVMeoF.

A Non-Volatile Memory Express (NVMe) driver is preferably executed on the RDMA driver, in order to allow the plurality of computing nodes CN1 to CN3 or the plurality of processors 175, 177, and 178 to access the storage device 925.

As illustrated herein, the first computing node CN1 or the processor 175 is configured to execute the NVMe driver NSKa on the RDMA driver RCPa. Accordingly, high-performance, scalable data-sharing can be provided.

The first computing node CN1 or the processor 175 can be configured to execute Filesys on the NVMe driver NSKa, and execute an application on the Filesys.

Meanwhile, unlike other computing nodes or processors, the first computing node CN1 or the processor 175 can be configured to further execute a storage device driver NDR for driving the storage device 925. Accordingly, the first computing node CN1 or the processor 175 can directly control the storage device 925.

Meanwhile, the signal processing device 170 according to an embodiment of the present disclosure can further include a second computing node CN2 or a second processor 177 configured to exchange data with the processor 175 or the storage device 925 based on PCI Express.

Meanwhile, the first computing node CN1 or the processor 175 can operate as a host and the second computing node CN2 or the second processor 177 can operate as a client, and the first computing node CN1 or the processor 175 can control the storage device 925 in response to a data write or data read request from the second computing node CN2 or the second processor 177 for writing data to the storage device 925 or reading data from the storage device 925. Accordingly, high-performance, scalable data-sharing can be provided.

Meanwhile, in order to access the storage device 925, the second computing node CN2 or the second processor 177 can be configured to execute a PCI Express RC PECb, and execute a second PCI Express driver on the PCI Express RC PECb. Accordingly, high-performance, scalable data-sharing can be provided while performing data communication based on a flexible cable CB.

Meanwhile, the second computing node CN2 or the second processor 177 can be configured to execute a second HCA driver HDVb on the second PCI Express driver, and execute a second RDMA driver RCPb on the second HCA driver HDVb. Accordingly, high-performance, scalable data-sharing can be provided.

For example, the second computing node CN2 or the second processor 177 can be configured to execute the PCI Express RC PECb, execute a PCI Express switch driver on the PCI Express RC PECb, execute a PCI Express NTB driver on the PCI Express switch driver, and execute a Host Channel Adapter (HCA) driver HDVb on the PCI Express NTB driver.

Meanwhile, the second computing node CN2 or the second processor 177 is configured to execute the RDMA driver RCPb on the HCA driver HDVb.

Unlike FIG. 8, the HCA driver HDVb for operating the InfiniBand card is executed on the PCI Express NTB driver, thereby allowing the HCA driver HDVb to transmit an RDMA data packet to the PCI Express Bus.

Meanwhile, the second computing node CN2 or the second processor 177 is configured to execute a Non-Volatile Memory Express (NVMe) driver NSKb on the RDMA driver RCPb. Accordingly, high-performance, scalable data-sharing can be provided.

Meanwhile, the second computing node CN2 or the second processor 177 can be configured to execute Filesys on the NVMe driver NSKb, and execute an application on the Filesys.

Meanwhile, the signal processing device 170 according to an embodiment of the present disclosure can further include a third computing node CN3 or a third processor 178 configured to exchange data with the processor 175 or the storage device 925 based on PCI Express.

Meanwhile, the first computing node CN1 or the processor 175 can operate as a host and the third computing node CN3 or the third processor 178 can operate as a client, and the first computing node CN1 or the processor 175 can control the storage device 925 in response to a data write or data read request from the third computing node CN3 or the third processor 178 for writing data to the storage device 925 or reading data from the storage device 925. Accordingly, high-performance, scalable data-sharing can be provided.

Meanwhile, in order to access the storage device 925, the third computing node CN3 or the third processor 178 can be configured to execute a PCI Express RC PECc, and execute a second PCI Express driver on the PCI Express RC PECc. Accordingly, high-performance, scalable data-sharing can be provided while performing data communication based on a flexible cable Cc.

Meanwhile, the third computing node CN3 or the third processor 178 can be configured to execute a second HCA driver HDVc on the second PCI Express driver, and execute a second RDMA driver RCPc on the second HCA driver HDVc. Accordingly, high-performance, scalable data-sharing can be provided.

For example, the third computing node CN3 or the third processor 178 can be configured to execute the PCI Express RC PECc, execute a PCI Express switch driver on the PCI Express RC PECc, execute a PCI Express NTB driver on the PCI Express switch driver, and execute the HCA driver HDVc on the PCI Express NTB driver.

Meanwhile, the third computing node CN3 or the third processor 178 is configured to execute the RDMA driver RCPc on the HCA driver HDVc.

Unlike FIG. 8, the HCA driver HDVc for operating the InfiniBand card is executed on the PCI Express NTB driver, thereby allowing the HCA driver HDVc to transmit an RDMA data packet to the PCI Express Bus.

Meanwhile, the third computing node CN3 or the third processor 178 is configured to execute a Non-Volatile Memory Express (NVMe) driver on the RDMA driver RCPc. Accordingly, high-performance, scalable data-sharing can be provided.

Meanwhile, the third computing node CN3 or the third processor 178 can be configured to execute Filesys on the NVMe driver NSKc, and execute an application on the Filesys.

Meanwhile, the signal processing device 170 according to an embodiment of the present disclosure further includes a PCI Express switch 736b configured to receive data input through an external flexible cable CB.

Meanwhile, the first computing node CN1 or the processor 175 can be configured to store data in the storage device 925. Accordingly, high-performance, scalable data-sharing can be provided while performing data communication based on the flexible cable CB.

Meanwhile, the storage device 925 can be connected directly to a first computing node CNm1 or the processor 175 or connected to the PCI Express switch 736b.

Meanwhile, the PCI Express switch 736b can perform USP communication or NRB communication.

FIG. 10 is an exemplary internal block diagram of a signal processing device according to another embodiment of the present disclosure.

Referring to FIG. 10, a signal processing device 170m according to another embodiment of the present disclosure includes a first computing node CNm1 or the processor 175, or a second computing node CNm2 or the second processor 177, and the storage device 925.

The first computing node CNm1 or the processor 175 can operate as a host, and the second computing node CNm2 or the second processor 177 can operate as a client.

To this end, in order to allow the second computing node CNm2 or the second processor 177 to access the storage device 925, the first computing node CNm1 or the processor 175 can be configured to execute a PCI Express End Point (EP) PEE and execute a Host Channel Adapter (HCA) driver HDVm on the PCI Express End Point (EP) PEE.

For example, the first computing node CNm1 or the processor 175 can be configured to execute the PCI Express End Point (EP) PEE, execute a PCI Express End Point Function PEF on the PCI Express End Point (EP) PEE, and execute the HCA driver HDVm on the PCI Express End Point Function PEF.

Meanwhile, the first computing node CNm1 or the processor 175 is configured to execute a Remote Direct Memory Access (RDMA) driver RCPa on the HCA driver HDVm.

Meanwhile, the first computing node CN1 or the processor 175 is configured to execute the NVMe driver NSKa on the RDMA driver RCPa. Accordingly, high-performance, scalable data-sharing can be provided.

Meanwhile, the first computing node CN1 or the processor 175 can be configured to execute Filesys on the NVMe driver NSKa, and execute an application on the Filesys.

For example, the second computing node CNm2 or the second processor 177 can be configured to execute the PCI Express RC PECb, execute a PCIe client driver PCDm on the PCI Express RC PECb, and execute the HCA driver HDVb on the PCIe client driver PCDm.

Meanwhile, the second computing node CNm2 or the second processor 177 is configured to execute the RDMA driver RCPb on the HCA driver HDVb.

Meanwhile, the second computing node CNm2 or the second processor 177 is configured to execute the NVMe driver NSKb on the RDMA driver RCPb. Accordingly, high-performance, scalable data-sharing can be provided.

Meanwhile, the second computing node CNm2 or the second processor 177 is configured to execute Filesys on the NVMe driver NSKb, and execute an application on the Filesys.

In FIG. 10, the first computing node CN1 or the processor 175 and the second computing node CNm2 or the second processor 177 are connected directly without the PCI Express switch 736b, unlike FIG. 9.

To this end, the first computing node CN1 or the processor 175, which is directly connected to the storage device 925, acts as an endpoint, and thus executes the PCI Express End Point PEE, as illustrated herein.

In response thereto, the second computing node CNm2 or the second processor 177 executes the PCI Express RC PECb.

Meanwhile, the PCI Express Endpoint Function PEF in the first computing node CN1 or the processor 175 can be configured to perform a request and command of the second computing node CNm2 or the second processor 177 that desires to access the storage device 925.

Meanwhile, the PCIe client driver PCDm in the second computing node CNm2 or the second processor 177 can be configured to enumerate the first computing node CN1 or the processor 175 to the PCI Express bus, and perform data communication.

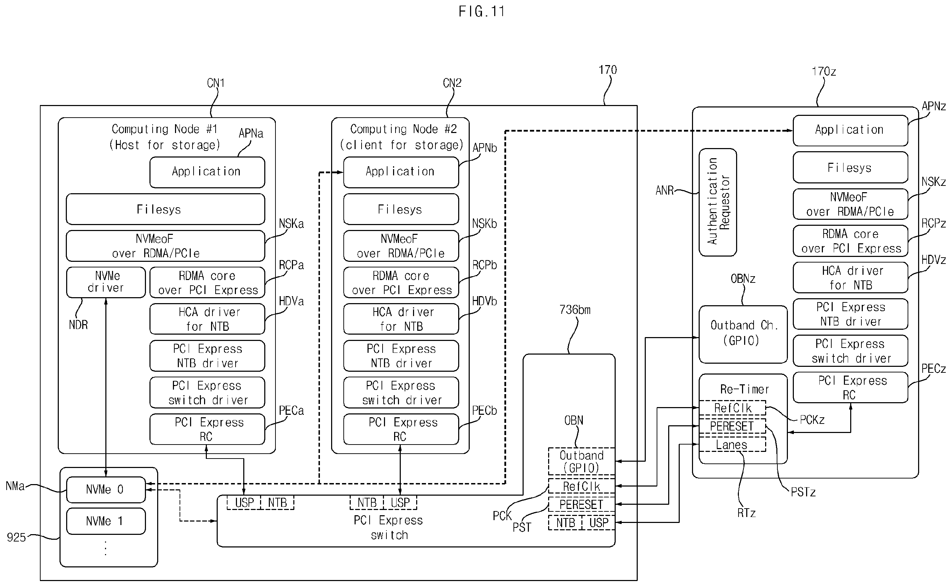

FIG. 11 is an exemplary internal block diagram of a communication apparatus for vehicle according to an embodiment of the present disclosure.

Referring to FIG. 11, a communication apparatus 900 for vehicle (hereinafter referred to as a vehicle communication apparatus) according to an embodiment of the present disclosure includes a signal processing device 170, and a second signal processing device 170Z configured to exchange data with the signal processing device 170.

The signal processing device 170 can be the central signal processing device of FIG. 6, and the second signal processing device 170Z can be the zonal signal processing device of FIG. 6.

As illustrated in FIG. 9, the signal processing device 170 includes the first computing node CNm1 or the processor 175, the second computing node CNm2 or the second processor 177, and the storage device 925.

The operations of the first computing node CNm1 or the processor 175, the second computing node CNm2 or the second processor 177, and the storage device 925 can be the same as those described above with reference to FIG. 9.

Meanwhile, the signal processing device 170 further includes a PCI Express switch 736b.

Meanwhile, the PCI express switch 736b can perform USP communication or NRB communication.

Meanwhile, as illustrated in FIG. 7B, the vehicle communication apparatus 900 according to an embodiment of the present disclosure can further include a retimer RTz configured to receive data from the second signal processing device 170Z and transmit the data to the signal processing device 170.

The retimer RTz can include a RefClk terminal PCKz for a RefClk signal, a PERESET terminal for a PERESET signal, a lane terminal RTz for PCI Express data line Tx/Rx.

Meanwhile, the second signal processing device 170Z can include a GPIO terminal OBNz for a separate line (outband) to transmit a control signal or a simple data signal.

Meanwhile, a line for transmitting RefClk and PERESET signals or a separate line (outband) for transmitting a control signal or a simple data signal can be required between the signal processing device 170 and the second signal processing device 170Z or between the signal processing device 170 and the retimer RTz.

To this end, the PCI express switch 736b can include a GPIO terminal OBN for a separate line to transmit a control signal or a simple data signal, a RefClk terminal PCK to transmit the RefClk signal, a PERESET terminal PST to transmit the PERESET signal, an NTB/USP terminal, etc.

Meanwhile, the second signal processing device 170z can be configured to execute a PCI Express RC PECz, execute a PCI Express switch driver on the PCI Express RC PECz, execute a PCI Express NTB driver on the PCI Express switch driver, and execute an HCA driver HDVz on the PCI Express NTB driver.

Meanwhile, the second signal processing device 170z is configured to execute an RDMA driver RCPz on the HCA driver HDVz.

Meanwhile, the second signal processing device 170z can be configured to execute an NVMe driver NSKz on the RDMA driver RCPz. Accordingly, high-performance, scalable data-sharing can be provided.

Meanwhile, the second signal processing device 170z is configured to execute Filesys on the NVMe driver NSKz, and execute an application on the Filesys.

Meanwhile, the second signal processing device 170z can be configured to execute an authentication requestor ANR for authentication.

Meanwhile, in response to a request for authentication from the authentication requestor ANR in another processor 175 or another signal processing device 170Z, the first computing node CN1 or the processor 175 can be configured to perform authentication based on a security key, and exchange data with the processor 175 or the signal processing device 170 that has been authenticated. Accordingly, it is possible to block access of an unauthorized processor or signal processing device to the storage device 925, thereby improving security of the storage device 925.

Meanwhile, the first computing node CN1 or the processor 175 can be configured to encrypt or decrypt data in the secured area of the storage device 925. Accordingly, security of the storage device 925 can be improved.

Meanwhile, high-performance, scalable data-sharing can be provided by implementing the same PCI Express-based RDMA in the signal processing device 170 and the second signal processing device 170Z.

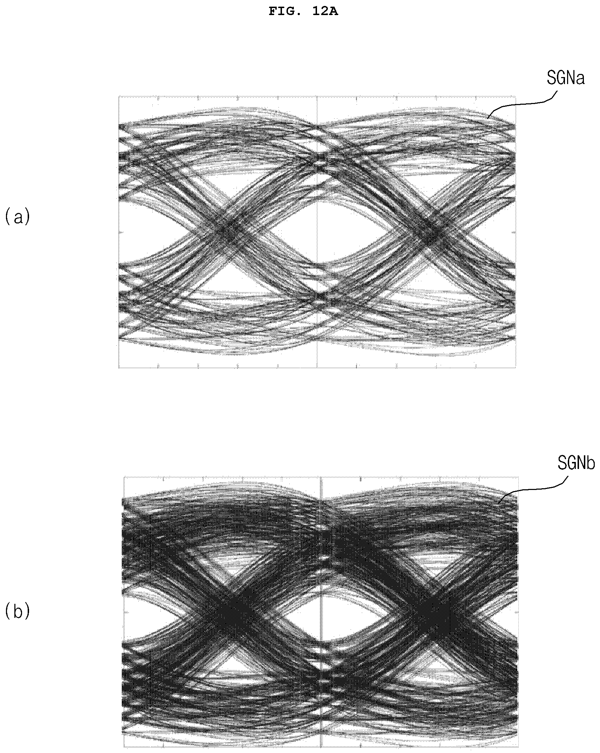

FIGS. 12A to 14 are diagrams referred to in the description of operation of FIG. 9 to 11.

FIG. 12A is a diagram explaining signal attenuation according to a distance between the signal processing device 170 and the second signal processing device 170Z.

In FIG. 12A, (a) illustrates an eye diagram of a PCI Express bus signal SGNa in the case in which a distance between the signal processing device 170 and the second signal processing device 170Z is a first distance.

Referring to the drawing, in the case in which the distance between the signal processing device 170 and the second signal processing device 170Z is the first distance, the PCI Express bus signal SGNa can be generated as illustrated in (a) of FIG. 12A.

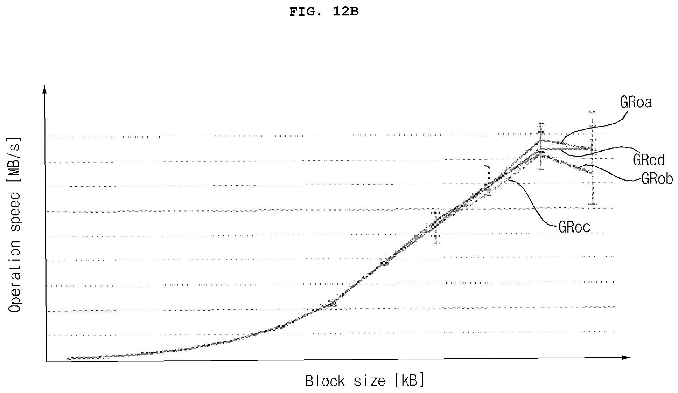

In FIG. 12A, (b) illustrates an eye diagram of the PCI Express bus signal SGNb in the case in which a distance between the signal processing device 170 and the second signal processing device 170Z is a second distance.

Referring to the drawing, in the case in which the distance between the signal processing device 170 and the second signal processing device 170Z is the second distance, the PCI Express bus signal SGNb can be generated as illustrated in (b) of FIG. 12A.

Signal attenuation increases as the distance between the signal processing device 170 and the second signal processing device 170Z increases.

Accordingly, the vehicle communication apparatus 900 according to an embodiment of the present disclosure can further include a retimer RTz that receives data from the second signal processing device 170Z and transmits the data to the signal processing device 170, as illustrated in FIG. 7B. Accordingly, signal attenuation between the signal processing device 170 and the second signal processing device 170Z can be reduced.

FIG. 12B is a diagram illustrating an operation speed according to a data size for each distance between the signal processing device 170 and the second signal processing device 170Z.

Referring to the drawing, GROa indicates an operation speed according to a data size when the signal processing device 170 and the second signal processing device 170Z are directly connected, GROd indicates an operation speed according to a data size when a distance between the signal processing device 170 and the second signal processing device 170Z is 7 m, GROb indicates an operation speed according to a data size when a distance between the signal processing device 170 and the second signal processing device 170Z is 1 m, and GROc indicates an operation speed according to a data size when a distance between the signal processing device 170 and the second signal processing device 170Z is 2 m.

As illustrated herein, it can be seen that there is no significant difference between the case in which the signal processing device 170 and the second signal processing device 170Z are directly connected and the case in which a distance between the signal processing device 170 and the second signal processing device 170Z is 7 m.

Accordingly, the vehicle communication apparatus 900 of the present disclosure will be described based on an example in which a distance between the signal processing device 170 and the second signal processing device 170Z is 7 m, by using the retimer Rtz and the like.

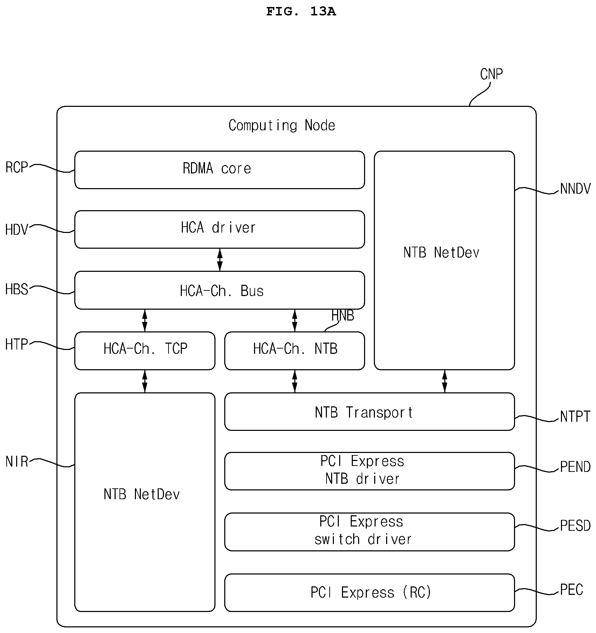

FIG. 13A is an internal diagram illustrating an example of a computing node or a processor.

Referring to FIG. 13A, a computing node CNP or a processor 175 can be configured to execute a PCI Express RC PEC, execute a PCI Express switch driver PESD on the PCI Express RC PEC, execute a PCI Express NTB driver PEND on the PCI Express switch driver PESD, and execute an HCA driver HDV on the PCI Express NTB driver PEND.

Meanwhile, the computing node CNP or the processor 175 can be configured to further execute a Non-Transparent Bridge (NTB) transport NTPT between the PCI Express driver PESD or PEND and the HCA driver HDV.

In the drawing, an example is illustrated in which the NTB transport NTPT is executed on the PCI Express NTB driver PEND, a Host Channel Adapter (HCA)-Channel HNB for NTB is executed on the NTB transport NTPT, a Channel Bus HNB is executed on the HCA-Channel HNB for NTB, and the HCA driver HDV is executed on the Channel Bus HNB.

Meanwhile, the computing node CNP or the processor 175 can be configured to execute an RDMA driver RCP on the HCA driver HDV.

Meanwhile, the computing node CNP or the processor 175 can be configured to further execute a network interface controller NIR.

Meanwhile, the computing node CNP or the processor 175 can be configured to execute an HCA-Channel HTP for TCP on the network interface controller NIR, and execute the Channel Bus HNB on the HCA-Channel HTP for TCP.

Meanwhile, the computing node CNP or the processor 175 can be configured to execute NTB NetDev NNDV on the NTB transport NTPT.

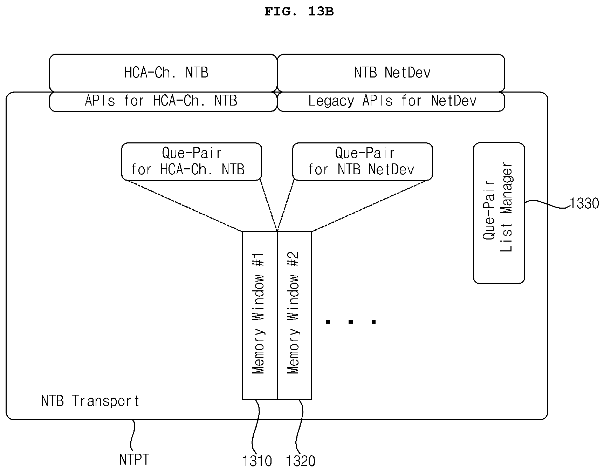

FIG. 13B is a diagram explaining the NTB transport of FIG. 13A.

Referring to FIG. 13B, the NTB transport NTPT can simultaneously process a request from the HCA-Channel HNB for NTB and a request from the NTB NetDev NNDV.

Meanwhile, the request from the HCA-Channel HNB for NTB and the request from the NTB NetDev NNDV are required to be processed through the PCI Express switch driver PESD and the PCI Express NTB driver PEND.

To this end, the NTB transport NTPT executes a first memory window 1310 for the request from the HCA-Channel HNB for NTB, and a second memory window 1320 for the request from the NTB NetDev NNDV.

Meanwhile, the first memory window 1310 can be configured to allocate a Que-Pair for the HCA channel, and the second memory window 1320 can be configured to allocate a Que-Pair for the NTB NetDev NNDV.

Further, the NTB transport NTPT can be configured to execute a Que-Pair list manager 1330 that manages each Que-Pair list.

That is, the NTB transport NTPT can be configured to generate and manage each Que-Pair list, assign a unique ID value to each device, and separately process requests from each device.

In this manner, the NTB transport NTPT can be configured to separately process the request form the HCA-Channel HNB for NTB and the request from the NTB NetDev NNDV.

Specifically, the NTB transport NTPT can be configured to separately process an Application Programming Interface (API) based on NTB of the HCA-Channel, and an API based on NTB NetDev.

Meanwhile, the NTB transport NTPT can be configured to generate and manage a Que-Pair list

Meanwhile, according to FIG. 13A, an application using the network interface controller NIR and an application using the RDMA API can simultaneously exchange data via PCI Express.

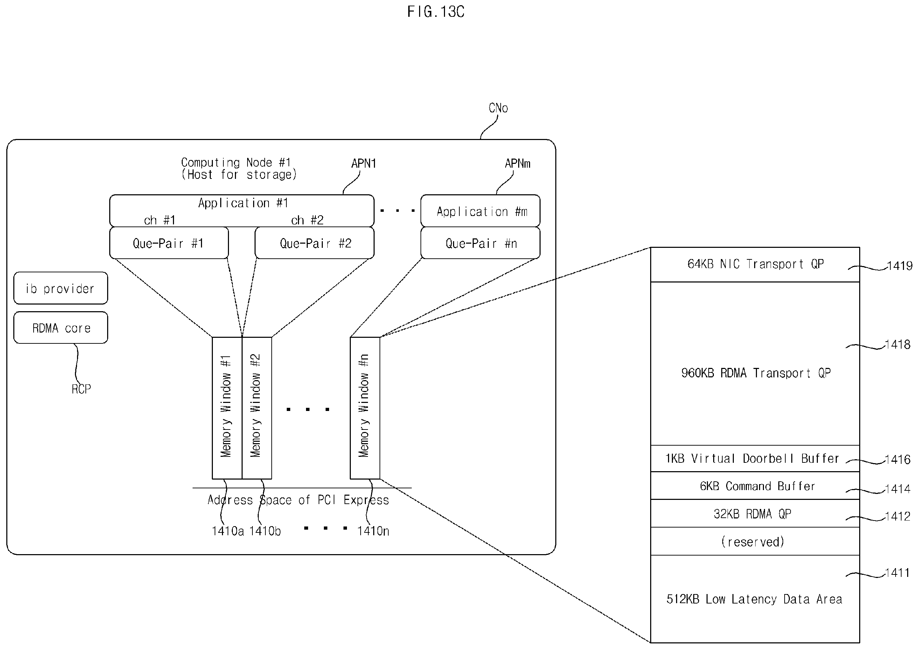

FIG. 13C is a diagram illustrating an example of dividing the storage device 925 into a plurality of spaces.

Referring to FIG. 13C, the first computing node CN1 or the processor 175 can be configured to divide the storage device 925 into a plurality of areas or a plurality of memory windows 1410a to 1410n, and configured to map each of the areas or each of the plurality of memory windows 1410a to 1410n to each Que-Pair.

Meanwhile, the respective Que-Pairs can correspond to a plurality of applications APN1 to APNm.

Meanwhile, each of the areas or each of the memory windows 1410a to 1410n can include a Low Latency Data Area 1411, RDMA QP 1412, a Command Buffer 1414, a Virtual Doorbell Buffer 1416, RDMA Transport QP 1418, and NIC Transport QP 1419.

Meanwhile, the NIC Transport QP 1419 can be an area used by the NTB NetDev NNDV, the RDMA Transport QP 1418 can be an area where payload data to be transmitted via RDMA is read and written, and the Virtual Doorbell Buffer 1416 can be an area where Virtual Doorbell Event information is recorded.

Meanwhile, the Command Buffer 1414 can be an area where a command to be transmitted to the Peer is recorded, the RDMA QP 1412 can be an area where configuration information, Send/Receive/Completion Queue information are recorded, and the Low Latency Data Area 1411 can be an area where small-sized data requiring low latency is recorded.

Meanwhile, data generation and processing in the vehicle communication apparatus are often asymmetric across domains.

For example, the processor 175 that performs autonomous driving in the signal processing device 170 collects data in real time from numerous sensors and store the data in the storage device 925, and a processor that performs a connectivity service performs some processing on the collected and stored data and transmits the data to a cloud server.

In this case, if read and write operations occur simultaneously for the same storage device 925, the system performance is significantly reduced, causing much difficulty in data processing and management.

Accordingly, the present disclosure proposes a method of managing the storage space of the storage device 925 by dividing the storage space. In this manner, data processing and management can be simplified, and system performance and stability can increase.

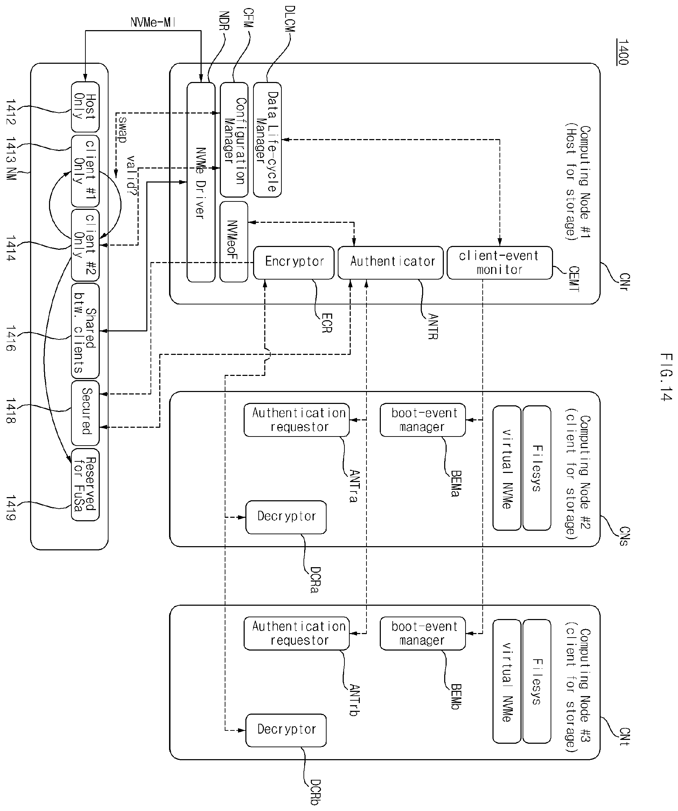

Dividing of the storage space of the storage device 925 will be described in further detail with reference to FIG. 14 and subsequent figures.

FIG. 14 is a diagram explaining operation of a computing node in a vehicle communication apparatus 1400 according to an embodiment of the present disclosure.

Referring to FIG. 14, the vehicle communication apparatus 1400 according to an embodiment of the present disclosure can include a plurality of computing nodes CNr to CNt.

In this case, the computing nodes CNr to CNt can correspond to a plurality of processors or a plurality of signal processing devices.

The following description will be made based on an example in which the computing nodes CNr to CNt are the processors 175, 177, and 178.

A first computing node CNr or the processor 175 can be configured to execute a storage device driver NDR to control a storage device NM.

Meanwhile, the first computing node CNr or the processor 175 can be configured to execute Configuration Manager CFM on the storage device driver NDR, and execute Data Life-cycle Manager DLCM on the Configuration Manager CFM.

Meanwhile, the first computing node CNr or the processor 175 can be configured to execute an encryptor ECR for encryption, an authenticator ANTR for authentication, and a client event monitor CEMT.

Meanwhile, the first computing node CNr or the processor 175 can be configured to divide the storage device 925 into a plurality of areas.

Meanwhile, the storage device NM can be divided into a first area 1412 for the first computing node CNr or the processor 175 which is a host, a second area 1413 for a second computing node CNs or a second processor 177 which is a client, a third area 1414 for a third computing node CNt or a third processor 178, a shared area 1416, a secured area 1418, and a reserved area 1419.

Meanwhile, the second computing node CNs or the second processor 177 can be configured to execute an authentication requestor ANTra, a decryptor DCRa, and a boot-event manager BEMa.

Meanwhile, the third computing node CNt or the third processor 178 can be configured to execute an authentication requestor ANTrb, a decryptor DCRb, and a boot-event manager BEMb.

Meanwhile, the first computing node CNr or the processor 175 can be configured to divide the storage device 925 into a plurality of areas and map the areas to each of the plurality of processors 175, 177, and 178 or each of the plurality of signal processing devices 170 and 170Z, and swap or replace some of the plurality of areas based on power off or restart of some of the processors or some of the signal processing devices.

In the drawing, an example is illustrated in which the third area 1414 is changed to the second area 1413 in the storage device NM.

Meanwhile, the boot-event managers BEMa and BEMb, executed in the second computing node CNs or the third computing node CNt which is a client, are configured to transmit a relevant event during power off or restart of each client to the client-event monitor CEMT in the first computing node CNr or the processor 175 which is a host.

The client-event monitor CEMT is configured to transmit the event to the Data Life-cycle Manager DLCM, and the event is then transmitted to the Configuration Manager CFM.

The Configuration Manager CFM can swap or exchange the second area 1413 and the third area 1414, which are exclusively used by each client, through the storage device driver NDR.

Then, the swapped areas in the storage device NM can be applied without modification when the system restarts.

Meanwhile, when the system restarts, the second computing node CNs or the third computing node CNt, which is a client, needs to be authenticated by the first computing node CNr which is a host, so as to normally access the storage device NM.

When the system restarts, the authentication requestors ANTra and ANTrb executed in the second computing node CNs or the third computing node CNt, which is a client, transmit a request for device authentication to the authenticator ANTR in the first computing node CNr which is a host, before loading a virtual storage device.

The authenticator ANTR in the first computing node CNr can access the secured area 1418 of the storage device NM to read a security key appropriate for device authentication, and can authenticate the device if the request is valid.

Information on whether the second computing node CNs or the third computing node CNt, which is a client, is authenticated is transmitted to the first computing node CNr, and the second computing node CNs or the third computing node CNt, which has been authenticated, is allowed access to the storage device NM.

Meanwhile, the second computing node CNs or the third computing node CNt that has failed authentication cannot access any area of the storage device NM.

Meanwhile, the second computing node CNs or the third computing node CNt, which has been successfully authenticated, can access all the allowed areas without requesting authentication through the authentication requestors ANTra and ANTrb.

However, in order for the second computing node CNs or the third computing node CNt, which has been successfully authenticated, to access the secured area 1418, the second computing node CNs or the third computing node CNt is required to be granted access through the authentication requestors ANTra and ANTrb during each access attempt.

In addition, it is desirable to encrypt or decrypt all data (payload) read from or written to the secured area 1418.

Meanwhile, the configuration manager CFM is configured to check validity of a corresponding namespace upon resetting, and if a problem occurs, configured to replace the corresponding namespace with a namespace that has waited for safety purposes.

Meanwhile, the first computing node CNr or the processor 175 in the signal processing device 170 according to an embodiment of the present disclosure can be configured to store data, input through an external flexible cable CB, in the first area of the storage device NM, and the second computing node CNs or the second processor 177 can be configured to read data from the first area of the storage device NM and change a namespace of the first area of the storage device NM. Accordingly, high-performance, scalable data-sharing can be provided while performing data communication based on the flexible cable CB.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising:
a storage device; and
a processor configured to execute a Peripheral Component Interconnect (PCI) Express driver, execute a Host Channel Adapter (HCA) driver on the PCI Express driver, and execute a Remote direct memory access (RDMA) driver on the HCA driver.

2. The signal processing device of claim 1, wherein the processor is configured to execute a Non-Volatile Memory Express (NVMe) driver on the RDMA driver.

3. The signal processing device of claim 1, wherein the processor is configured to exchange data with the storage device through the NVMe driver.

4. The signal processing device of claim 1, further comprising a PCI switch configured to receive data input through an external flexible cable,
wherein the processor is configured to store the data in the storage device.

5. The signal processing device of claim 1, further comprising a second processor configured to exchange data with the processor or the storage device based on PCI Express.

6. The signal processing device of claim 5, wherein the processor is configured to operate as a host, and the second processor is configured to operate as a client,
wherein the processor is configured to control the storage device in response to a data write or data read request from the second processor for writing data to the storage device or reading data from the storage device.

7. The signal processing device of claim 5, wherein the second processor is configured to execute a PCI Root Complex (RC) and execute a second PCI driver on the PCI RC for accessing the storage device.

8. The signal processing device of claim 7, wherein the second processor is configured to execute a second HCA driver on the second PCI driver, and execute a second RDMA driver on the second HCA driver.

9. The signal processing device of claim 5, wherein the processor is configured to execute a PCI End Point (EP) and execute the HCA driver on the PCI EP for the second processor to access the storage device.

10. The signal processing device of claim 1, wherein the processor is configured to further execute a Non-Transparent Bridge (NTB) transport between the PCI driver and the HCA driver.

11. The signal processing device of claim 10, wherein the NTB transport is configured to generate and manage a Que-Pair list.

12. The signal processing device of claim 10, wherein the NTB transport is configured to separately process an Application Programming Interface (API) based on the NTB of a Host Channel Adapter (HCA) channel and an API based on NTB NetDev.

13. The signal processing device of claim 1, wherein the processor is configured to divide the storage device into a plurality of areas, and map each of the areas to each Que-Pair.

14. The signal processing device of claim 1, wherein the processor is configured to divide the storage device into a plurality of areas and map the areas to each of a plurality of processors or each of a plurality of signal processing devices, and swap or replace some of the plurality of areas based on power off or restart of some of the processors or some of the signal processing devices.

15. The signal processing device of claim 1, wherein in response to a request for authentication from another processor or another signal processing device, the processor is configured to perform authentication based on a security key, and exchange data with the processor or the signal processing device authenticated.

16. The signal processing device of claim 1, wherein the processor is configured to encrypt or decrypt data in a secured area of the storage device.

17. The signal processing device of claim 1, further comprising a second processor,
wherein the processor is configured to store data, input through an external flexible cable, in a first area of the storage device, and
wherein the second processor is configured to read data from the first area of the storage device and change a namespace of the first area of the storage device.

18. A signal processing device comprising:
a storage device; and
a processor configured to store data, input through an external flexible cable, in a first area of the storage device; and
a second processor configured to read data from the first area of the storage device and change a namespace of the first area of the storage device.

19. A communication apparatus for vehicle comprising:
a signal processing device; and
a second signal processing device configured to exchange data with the signal processing device,
wherein the signal processing device comprises the signal processing device of any one of claims 1 to 18.

20. The communication apparatus for vehicle of claim 19, further comprising a retimer configured to receive data from the second signal processing device and transmit the data to the signal processing device.
